# EUROPEAN PATENT APPLICATION

(11) **EP 1 947 650 A2**
(43) Date of publication of application: **23.07.2008**
(21) Application number: 07124171.5
(22) Date of filing: 28.12.2007
(51) Int. Cl.: G11B 33/12

(54) **Device with support structure for hard disk drive and method for mounting hard disk drive**

(30) Priority: 17.01.2007 EP 07000948; 18.01.2007 EP 07000996
(71) Applicant: ADVANCED DIGITAL BROADCAST S.A., 1292 Chambesy (CH)
(72) Inventor: Micewicz, Jaroslaw, 50-457, Wroclaw (PL)
(74) Representative: Hudy, Ludwik

(57) **Abstract**

In a device (101), comprising a support structure, a hard disk drive (121), having a printed circuit board at one side and a substantially plane plate at the opposite side, at least one mounting pad (131) having at least one layer of viscoelastic material, the hard disk drive (121) is mounted to the support structure via the mounting pad (131) and the substantially plane plate of the hard disk drive (121) faces the support structure. An air gap present between the support structure and the substantially plane plate of the hard disk drive enables flowing of air via this air gap for cooling of the substantially plane plate.

## Description

The invention relates to a device with a support structure for a hard disk drive and a method for mounting the hard disk drive.

Hard disk drives (HDDs) are used in a variety of electronic devices, such as desktop computers, notebooks, portable media players or set-top box devices. They can be mounted in these devices using various arrangements, each having its positive and negative aspects.

A HDD mounting arrangement can be configured to provide a number of functions. The first, essential function is to hold the HDD in a stable position, to prevent its dislocation during transportation of the electronic device. Further, the arrangement should allow cooling of the HDD. HDDs emit relatively large amount of heat and HDD operation in high temperature may result in early wear of the HDD. Next, the arrangement should protect the HDD against mechanical shock, for example during displacement or drop of the device, to avoid mechanical damage of the fragile parts inside the HDD. Moreover, it would be convenient for a user to isolate the vibrations of the HDD from the device casing, to eliminating casing resonance and make HDD operation as silent as possible.

Various mounting arrangements are used, depending on the working conditions of electronic devices, some of which will be explained below.

In desktop computers, expansion bays are commonly used, having vertical walls, to which the HDD is mounted. Due to a large size of a desktop computer case, there is a lot of free space surrounding the HDD, therefore efficient flow of air is possible to cool the HDD. In order to isolate the expansion bay from HDD vibrations, the HDD can be mounted on elastic bolts instead of screws, or can be hung on elastic stripes. Such an arrangement, due to use of dedicated expansion bay and mounting elements, is relatively costly and occupies a lot of space.

In laptop computers, HDDs are usually connected by means of screws to the casing. Little space is available for the mounting arrangement, therefore cooling is usually achieved by radiator structures or dedicated air ducts. There is also little place for vibration and shock isolation elements, therefore quiet and shock-resistant HDDs must be used. Such arrangements are relatively costly and complicated. Similar constraints apply to portable media players, where the space available for mounting the HDD can be even more constrained.

HDD mounting arrangements employed in set-top box devices, such as digital video recorders, are a combination of solutions used in desktop and laptop computers. A dedicated mounting structure is usually provided, to which the HDD is secured by means of screws or dedicated holders. The mounting structure can be a miniature expansion bay having vertical walls, or another dedicated holder. The disadvantage of such a solution is a relatively high cost arising from providing a number of dedicated components for mounting the HDD.

It is therefore desirable to provide a mounting arrangement for a HDD, which will provide a good support, cooling efficiency, vibration and shock isolation, but with a simpler, and thus cheaper, configuration than the known solution.

The object of the invention is a device, comprising a support structure, a hard disk drive, having a printed circuit board at one side and a substantially plane plate at the opposite side, at least one mounting pad having at least one layer of viscoelastic material, wherein the hard disk drive is mounted to the support structure via the mounting pad such that the substantially plane plate of the hard disk drive faces the support structure and an air gap is present between the support structure and the substantially plane plate of the hard disk drive so as to enable flow of air via the air gap for cooling of the substantially plane plate.

The mounting pad surfaces contacting the support structure and/or the hard disk drive can be adhesive. The mounting pad can have two or three layers of materials having different viscoelastic properties. The mounting pad can be at least 2 mm thick. The support structure can be formed by a fragment of a bottom or a top plate of the casing of the device or a fragment of the main printed circuit board. The mounting pad can be made of a substantially transparent material.

The object of the invention is also a method of mounting a hard disk drive to a support structure in a device, the hard disk drive having a printed circuit board at one side and a substantially plane plate at an opposite side, the method comprising the steps of providing a mounting pad having at least one layer of viscoelastic material, attaching the mounting pad to the support structure, attaching the hard disk drive to the mounting pad by the substantially plane plate, such that an air gap is present between the support structure and the substantially plane plate of the hard disk drive so as to enable flow of air via the air gap for cooling of the substantially plane plate.

The invention also relates to use of a mounting pad having at least one layer of viscoelastic material for mounting a hard disk drive to a support structure in a device, the hard disk drive having a printed circuit board at one side and a substantially plane plate at an opposite side, characterized in that the mounting pad connects the substantially plane plate of the hard disk drive with the support structure such that an air gap is present between the support structure and the substantially plane plate of the hard disk drive so as to enable flow of air via the air gap for cooling of the substantially plane plate.

The invention will now be described by way of an example and with reference to accompanying drawings in which:
Fig. 1 presents a device with a hard disk drive mounted at the bottom plate of its casing;
Fig. 2 presents a device with a hard disk drive mounted to its main printed circuit board;
Fig. 3 presents placement of mounting pads with respect to the plane plate of the hard disk drive;
Figs. 4A-4C present cross-sections of different types of support pads; and
Figs. 5A-5C present different arrangements of mounting pads.

The embodiments presented in the drawings are intended only for illustrative purpose and do not limit the scope of the present invention, as defined by the accompanying claims.

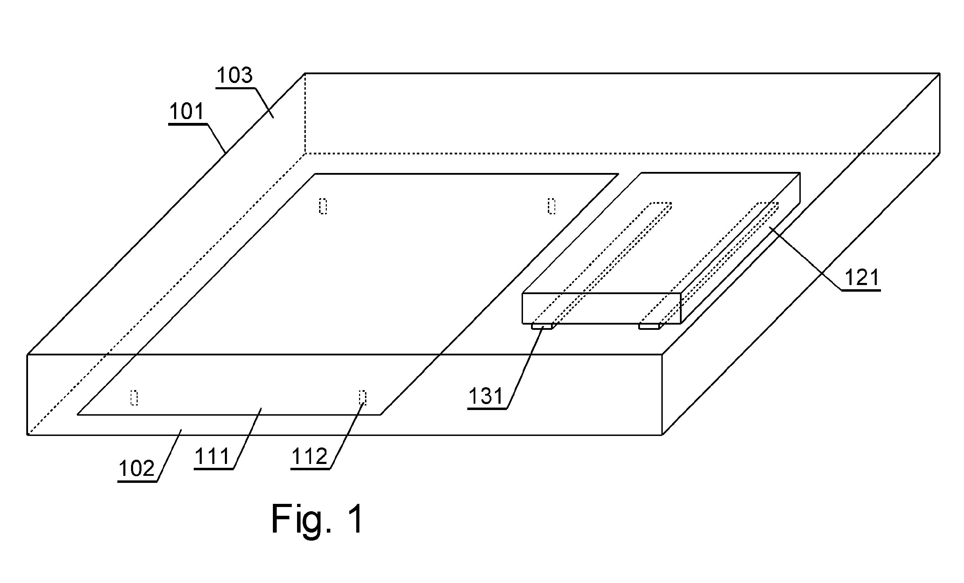

Fig. 1 presents a first embodiment, comprising a device 101 with a HDD 121 mounted at the bottom plate 102 of its casing, forming a support structure, next to a main printed circuit board 111.

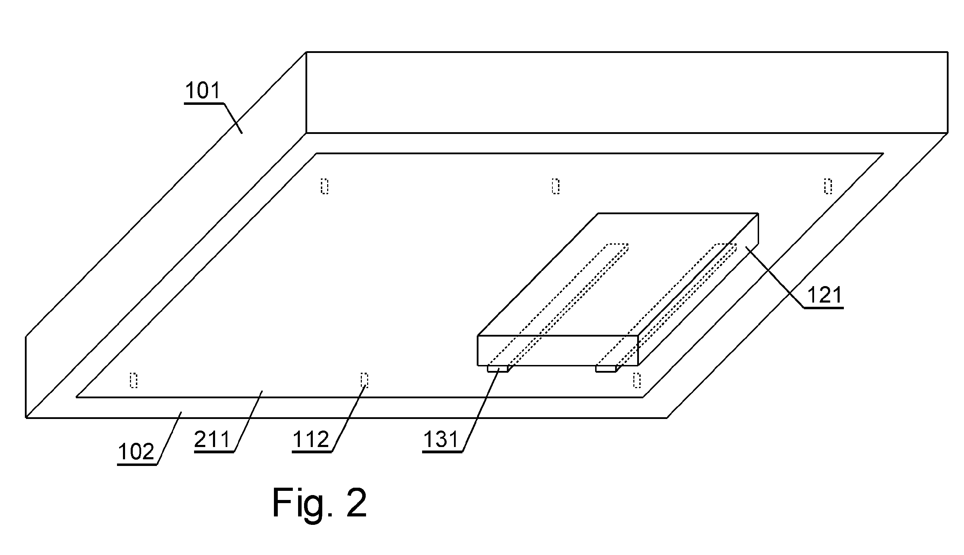

The bottom plate 102 of the casing is only one example of a support structure to which the HDD can be mounted with the arrangement according to the invention. The arrangement of the invention allows mounting the HDD to support structures not specifically dedicated for holding the HDD. For example, a fragment of the main printed circuit board 211, attached to the device's bottom plate 102 via standard connectors 112, e.g. plastic bolts or screws, as shown in Fig. 2, can be used for this purpose.

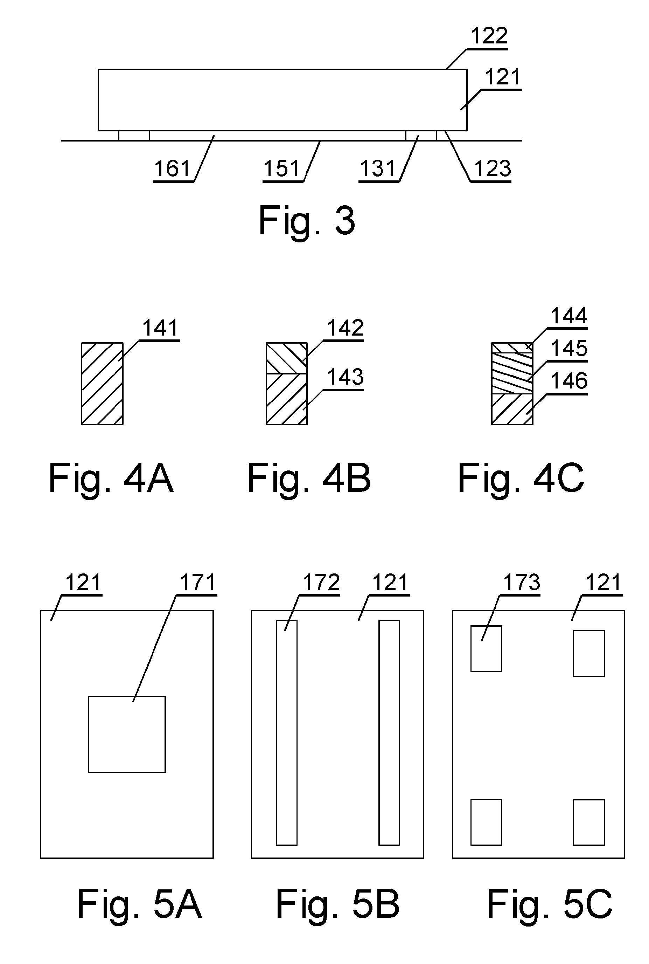

The HDD is mounted by means of at least one mounting pad 131. More mounting pads, for example two stripes as shown in Fig. 1, can be used. The mounting pad 131 has at least one layer of viscoelastic material, as shown in more details in Figs. 4A-4C. For easy assembly of the device, the pad 131 can have adhesive surfaces, allowing quick attachment to the HDD and to the support structure.

HDDs 121 usually have a printed circuit board (PCB) with electronic elements mounted to one side 122 of their casing along with radiating ribs, and a substantially plane plate at the opposite side 123, as schematically marked in Fig. 3. In the arrangement according to the invention, the HDD is attached to the support structure 151 by its plain or plane plate 123. The plane plate 123 provides more space for attaching mounting pads 131, thereby not limiting the area, number of and shape of the pads 131. Moreover, by assembling the HDD 121 with its side 122 with PCB and radiating ribs at the top, cooling efficiency is increased, as heat can more easily dissipate above the device. Furthermore, in most arrangements, the air gap 161 provided by the mounting pads between the support structure and the HDD will be smaller than the air gap above the HDD, thus making the cooling through the printed circuit board and radiating ribs more efficient.

In yet another embodiment, the HDD can be mounted to the top plate 103, i.e. cover, of the device, provided that the mounting pads withstand the strain caused by the weight of the HDD.

The height of the mounting pads determines the air gap 161 between the support structure 151 and the HDD 121. For efficient cooling of a 3,5" HDD it has been found that the mounting pads 131 should be at least 2 mm thick. Although the plate of the HDD is substantially plane, it may have some protrusions, which can extend about 1 mm above the plate. Pads which are 2 mm thick guarantee that there will be at least a 1 mm gap under the whole area of the HDD.

The base area of the mounting pads, the number of mounting pads and their placement depends on the size and weight of the HDD, the desired degree of vibrations isolation, the shock which the device should withstand and the amount of air gap necessary to cool the HDD.

In one embodiment, two highly compressible semi-closed cell EPDM foam (1400 N/m³) pads with acrylic adhesive, each 5 mm thick, having base dimensions of 2 cm x 12 cm, are enough to support a standard 3,5" HDD, providing efficient vibrations and shock isolation, as well as enough cooling space between the device bottom plate and the plane plate of the HDD.

The mounting pad can be made of a substantially transparent material. This is useful in a case when the plane plate of the hard disk drive has information printed on it, such as a serial number, a bar code or a manufacturing date. Use of a transparent mounting pad allows reading of the information printed on the hard disk when the mounting pad is attached to the disk such that it covers the printed information. This is especially useful during service of the hard disk, when the service requires access to hard disk identification information and eliminates the need to separate the mounting pad from the hard disk to read the information.

Figs. 4A-4C show cross-sections of different types of support pads. The support pad of Fig. 4A is made of one viscoelastic material 141. The support pad of Fig. 4B has two layers 142, 143, of which at least one has viscoelastic properties to provide vibrations isolation. The support pad of Fig. 4C has three layers, 144, 145, 146, of which at least one has viscoelastic properties to provide vibrations isolation. Embodiments of Fig. 4B and 4C allow combining materials of different properties. For example, one layer of viscoelastic or elastic material can be provided to protect against vibrations and shock, while a second layer of a rigid material can be provided to increase the air gap between the HDD and the support structure to increase cooling efficiency.

Figs. 5A-5C show different arrangements of mounting pads 131 with respect to the HDD 121. As shown in Fig. 5A, the HDD 121 can be attached to the mounting structure by a single mounting pad 171. As shown in fig. 5B, two mounting pads 172 in form of strips can be used. As shown in fig. 5C, four mounting pads 173 can be attached at the corners of the HDD 121. Nevertheless, depending on the HDD's shape, conditions of operation and casing's shape various other mounting pads arrangements can be used.

Using the arrangement according to the invention, it is possible to mount the HDD in an electronic device on a support structure not specially adapted for that purpose, such as a bottom plate of the device casing or a fragment of the main board. Elimination of a dedicated support results in simplified structure of the device, and thus reduces manufacturing and assembling costs. The described arrangement allows efficient isolation of the casing from vibrations, and at the same time provides an air gap for effective cooling.

## Claims

1. A device (101), comprising a support structure (151), a hard disk drive (121), the hard disk drive (121) having a printed circuit board at one side (122) and a substantially plane plate (123) at the opposite side, at least one mounting pad (131) having at least one layer of viscoelastic material (141) **characterized in that** the hard disk drive (121) is mounted to the support structure (151) via the mounting pad (131) such that the substantially plane plate (123) of the hard disk drive (121) faces the support structure (151) and an air gap (161) is present between the support structure (151) and the substantially plane plate (123) of the hard disk drive (121) so as to enable flow of air via the air gap (161) for cooling of the substantially plane plate (123) of the hard disk drive (121).

2. The device according to claim 1, **characterized in that** the mounting pad (131) has adhesive outer surfaces contacting the support structure (151) and/or the hard disk drive (121).

3. The device according to claim 1, **characterized in that** the mounting pad (131) has two layers (142, 143) of materials having different viscoelastic properties.

4. The device according to claim 1, **characterized in that** the mounting pad (131) has three layers (144, 145, 146) of materials having different viscoelastic properties.

5. The device according to claim 1, **characterized in that** the mounting pad (131) is at least 2 mm thick.

6. The device according to claim 1, **characterized in that** the support structure (151) is formed by a part of a bottom plate (102) of a device (101) casing.

7. The device according to claim 1, **characterized in that** the support structure (151) is formed by a top plate (103) of a device (101) casing.

8. The device according to claim 1, **characterized in that** the support structure (151) is formed by a part of a main printed circuit board (211).

9. The device according to claim 1, **characterized in that** the mounting pad (131) is made of a transparent material.

10. A device (101) comprising:
a support structure (151);
at least one mounting pad (131) having at least one layer of viscoelastic material (141) and attached to the support structure (151); and
a hard disk drive (121) attached to said at least one mounting pad (131), the hard disk drive (121) having a printed circuit board at one side (122) and a substantially plane plate (123) and facing by the substantially plane plate (123) the support structure (151) wherein between the support structure (151) and the hard drive (121) is formed an air gap (161) by said at least one mounting pad (131) to enable flow of air through the air gap (161) for cooling the substantially plane plate (123) of the hard disk drive (121).

11. A method for mounting a hard disk drive to a support structure in a device, the hard disk drive having a printed circuit board at one side and a substantially plane plate at an opposite side, the method comprising the steps of:
attaching a mounting pad having at least one layer of viscoelastic material to the support structure; and
attaching the hard disk drive to the mounting pad by the substantially plane plate to form an air gap between the support structure and the substantially plane plate of the hard disk drive to enable flow of air through the air gap for cooling the substantially plane plate of the hard disk drive.

12. Use of a mounting pad (131) having at least one layer of viscoelastic material (141) for mounting a hard disk drive (121) to a support structure (151), the mounting pad (131) inserted between the support structure (151) and hard disk drive having a printed circuit board at one side (122) and a substantially plane plate (123) at an opposite side to form an air gap between the support structure (151) and the substantially plane plate (123) of the hard disk drive to enable flow of air through the air gap (161) for cooling the substantially plane plate (123).
